# EUROPÄISCHE PATENTSCHRIFT

(11) **EP 2 137 622 B1**
(45) Veröffentlichungstag und Bekanntmachung des Hinweises auf die Patenterteilung: **11.07.2018**
(21) Anmeldenummer: 08736013.7
(22) Anmeldetag: 09.04.2008
(51) Int. Cl.: G06F 11/34

(54) **VERFAHREN UND DATENVERARBEITUNGSSYSTEM ZUR RECHNERGESTÜTZTEN PERFORMANZANALYSE EINES DATENVERARBEITUNGSSYSTEMS**
METHOD AND DATA PROCESSING SYSTEM FOR COMPUTER-ASSISTED PERFORMANCE ANALYSIS OF A DATA PROCESSING SYSTEM
PROCÉDÉ ET SYSTÈME DE TRAITEMENT DE DONNÉES POUR L'ANALYSE DE PERFORMANCE ASSISTÉE PAR ORDINATEUR D'UN SYSTÈME DE TRAITEMENT DE DONNÉES

(30) Priorität: 18.04.2007 DE 102007018300
(43) Veröffentlichungstag der Anmeldung: 30.12.2009
(73) Patentinhaber: Siemens Aktiengesellschaft, 80333 München (DE)
(72) Erfinder: MANGOLD, Florian, 81549 München (DE); HAMMER, Moritz, 81377 München (DE)
(86) Internationale Anmeldenummer: PCT/EP2008/054288
(87) Internationale Veröffentlichungsnummer: WO 2008/128895

(56) Entgegenhaltungen:
- US-A1- 2004 117 779
- US-B1- 6 377 907
- SANTIAGO N G ET AL: "A statistical approach for the analysis of the relation between low-level performance information, the code, and the environment" PARALLEL PROCESSING WORKSHOPS, 2002. PROCEEDINGS. INTERNATIONAL CONFER ENCE ON 18-21 AUGUST 2002, PISCATAWAY, NJ, USA,IEEE, 18. August 2002 (2002-08-18), Seiten 282-289, XP010608460 ISBN: 978-0-7695-1680-6
- ARISHOLM E ET AL: "Dynamic Coupling Measurement for Object-Oriented Software" IEEE TRANSACTIONS ON SOFTWARE ENGINEERING, IEEE SERVICE CENTER, LOS ALAMITOS, CA, US, Bd. 30, Nr. 8, 1. August 2004 (2004-08-01), Seiten 491-506, XP011115586 ISSN: 0098-5589
- REED D A ET AL: "PERFORMANCE ANALYSIS OF PARALLEL SYSTEMS: APPROACHES AND OPEN PROBLEMS" INTERNET CITATION, [Online] XP002352092 Gefunden im Internet: URL:http://www.llnl.gov/CASC/people/vetter /pubs/jspp98-open-problems-reed.pd> [gefunden am 1998-01-01]
- AHN D H ET AL: "Scalable Analysis Techniques for Microprocessor Performance Counter Metrics" SUPERCOMPUTING, ACM/IEEE 2002 CONFERENCE 16-22 NOV. 2002, PISCATAWAY, NJ, USA,IEEE, 16. November 2002 (2002-11-16), Seiten 3-3, XP010892974 ISBN: 978-0-7695-1524-3
- IAN JOLLIFFE: "Principal Component Analysis" ENCYCLOPEDIA OF STATISTICS IN BEHAVIORAL SCIENCE, [Online] Bd. 3, 2005, Seiten 1580-1584, XP002487258 John Wiley & Sons, Ltd, Chichester ISBN: 978-0-470-86080-9 Gefunden im Internet: URL:http://www.mrw.interscience.wiley.com/ emrw/9780470013199/esbs/article/bsa501/cur rent/pdf> [gefunden am 2008-07-07]
- VETTER J ET AL: "Managing Performance Analysis with Dynamic Statistical Projection Pursuit" SUPERCOMPUTING, ACM/IEEE 1999 CONFERENCE 13-18 NOV. 1999, PISCATAWAY, NJ, USA,IEEE, 13. November 1999 (1999-11-13), Seiten 44-44, XP010892822 ISBN: 978-1-58113-091-1
- YANG LINGYUN ET AL: "Statistical data reduction for efficient application performance monitoring" 6TH IEEE INT. SYMP. CLUSTER COMP. AND GRID, 2006; SIXTH IEEE INTERNATIONAL SYMPOSIUM ON CLUSTER COMPUTING AND THE GRID, 2006. CCGRID 06; SIXTH IEEE INTERNATIONAL SYMPOSIUM ON CLUSTER COMPUTING AND THE GRID: SPANNING THE WORLD AND BEYOND, 2006. CCGRID, 2006, Seiten 327-334, XP002487259

## Beschreibung

Die Erfindung betrifft ein Verfahren zur rechnergestützten Performanzanalyse eines Datenverarbeitungssystems, in welchem Programmcode mit einer Mehrzahl an Codeteilen abläuft. Die Erfindung betrifft ferner ein Datenverarbeitungssystem mit einer Ausführungsumgebung, in der der Programmcode mit der Mehrzahl an Codeteilen abläuft. Die Erfindung betrifft ferner ein Computerprogrammprodukt.

Ein Datenverarbeitungssystem, in welchem ein Programmcode mit einer Mehrzahl an Codeteilen abläuft, umfasst eine Vielzahl an Hardware- und Software-Komponenten. Codeteile umfassen beispielsweise Methoden, Prozeduren, Funktionen, Objekte usw. Bei einem komplexen Datenverarbeitungssystem ist es beinahe unmöglich, die Auswirkung einzelner wohldefinierter Codeteile in dem Gesamtsystem auf Performanz oder Ressourcenverbrauch zu ermitteln. Beim Ressourcenverbrauch sind beispielsweise der von einem Codeteil beanspruchte Speicherplatz sowie dessen Laufzeit von Bedeutung. Es ist zwar möglich, den Zeit- und/oder Speicherverbrauch einzelner Codeteile (Codefragmente) über eine Messung zu ermitteln. Die erhaltenen Messdaten sind jedoch häufig schwierig auszuwerten, da eine enorme Anzahl von Variablen gemessen wird. Die Messdaten bieten deshalb häufig keinen Anhaltspunkt dafür, welche der einzelnen Komponenten des Datenverarbeitungssystems zusammenwirken oder zusammengehören. Insbesondere kann keine Information darüber gewonnen werden, wie die einzelnen Codeteile zusammenwirken. Es ist insbesondere keine Informationsgewinnung darüber möglich, welche Methode/welches Objekt/welche Prozedur/bzw. Module allgemein/etc. von welcher Methode/welchem Objekt/welcher Prozedur/bzw. Module allgemein/ etc. abhängig ist. Ebenso ist keine Informationsgewinnung darüber möglich, wie sich Methoden/Objekte/Prozeduren/etc. auf Variationen anderer Methoden/Objekte/Prozeduren auswirken.

Bei der Entwicklung des Programmcodes zum Ablauf auf dem Datenverarbeitungssystem besteht für die Softwareentwickler keine Möglichkeit abzuschätzen, wie sich die einzelnen Codeteile innerhalb des Programmcodes und dem Gesamtsystem verhalten. Es ist insbesondere nur schwer möglich, solche Codeteile sowie Hardwarekomponenten zu identifizieren, welche sich Performanz mindernd in dem Datenverarbeitungssystem auswirken.

Bis zum gegenwärtigen Zeitpunkt erfolgt eine Analyse der Laufzeiteigenschaften, wie Performanz und Ressourcenverbrauch, anhand von Profilern und der sog. statischen Codeanalyse. Eine Analyse erfolgt bei Profilern in der Regel über einen sog. "Call-Tree" oder über einen sog. "Call-Graph" (in einem Multi-Threading-System). Dabei können jedoch nur gegenseitige Aufrufe der jeweiligen Codeteile ausgemacht werden. Call-Trees geben lediglich bedingt Aufschluss über die Eigenschaften eines Datenverarbeitungssystems. Beispielsweise kann durch einen Call-Tree keine Performanzminderung durch ein gemeinsam benutztes, gesperrtes Objekt, welches Bestandteil eines Codeteils ist, erkannt werden. Profiler liefern genaue Messungen von Codeteilen. Mit manchen Profilern ist es möglich, Codevariationen direkt in dem Programmcode bzw. dem Datenverarbeitungssystem zu messen. Ein Nachteil von Profilern besteht darin, dass diese nicht in der Lage sind, gemeinsame Faktoren des Datenverarbeitungssystems zu identifizieren.

Die statische Codeanalyse erlaubt es, Prognosen über das Verhalten eines bekannten Datenverarbeitungssystems abzugeben. Sog. Multi-Threading-Systeme entziehen sich jedoch durch ihre Komplexität bzw. dem chaotischen Verhalten einer zielgerichteten Analyse. Bei der statischen Codeanalyse besteht ein Problem darin, dass eine genaue Kenntnis des Datenverarbeitungssystems notwendig ist, um eine Performanzanalyse durchführen zu können.

In der Veröffentlichung "A Statistical Approach for the Analysis of the Relation between Low-Level Performance Information, the Code, and the Environment", von Santiago N. G. et al in Parallel Processing Workshops, 2002 Proceedings International Conference on 18-21 August 2002, Seiten 282-289, ist ein statistisches Verfahren zur Performanzanalyse von parallelen Programmen auf einem Datenverarbeitungssystem beschrieben. Dieses Verfahren nutzt die Kombination der bekannten Verfahren der Exploratory Data Analysis (EDA) und der Confirmatory Data Analysis (CDA), um in einer Reihe von durchgeführten Experimenten, bei denen der Programmierstil, die Programmiersprache, Compiler-Optionen und der Algorithmus geändert werden, eine statistische Auswertung durchzuführen.

Aus der Veröffentlichung "Dynamic Coupling Measurement for Object-Oriented Software", von Eric Arisholm et al. in IEEE TRANSACTIONS ON SOFTWARE ENGINEERING, IEEE SERVICE CENTER, LOS ALAMITOS, CA, US, Bd. 30, Nr. 8, 1. August 2004, Seiten 491-506, ist ein Verfahren zur Untersuchung der Kopplung von Klassen basierend auf einer dynamischen Systemanalyse bekannt. Dabei wird die Laufzeit der Objektinteraktionen hinsichtlich der Änderungsanfälligkeit von Klassen analysiert.

Die Veröffentlichung "PERFORMANCE ANALYSIS OF PARALLEL SYSTEMS: APPROACHES AND OPEN PROBLEMS" von Daniel A. Reed et al., in Proceedings of the Joint Symposium on Parallel Processing (JSPP), 1998, Seiten 239-256, offenbart ein Verfahren zum Optimieren von komplexen Anwendungen auf parallel arbeitenden Rechensystemen. Dieses Dokument beschreibt verschiedene Systeme zur Untersuchung des Verhaltens einer Anwendung durch das Aufnehmen von Performanzdaten.

Die Veröffentlichung "Scalable Analysis Techniques for Microprocessor Performance Counter Metrics" von Dong H. Ahn et al., SUPERCOMPUTING, ACM/IEEE 2002 CONFERENCE 16-22. November 2002, PISCATAWAY, NJ, USA, IEEE, Seiten 3-3, beschäftigt sich mit der Skalierung von Performanz- und Arbeitslastdaten, die integrierte Performanz-Messeinheiten in Mikroprozessoren sammeln. Mittels multivarianter statistischer Techniken wird basierend auf diesen Datensätzen das Verhalten für Rechensysteme skaliert. Via statistischem Clustering können Merkmale aus den Daten extrahiert und visualisiert werden.

In der Veröffentlichung "Principal Component Analysis" von Ian Jolliffe, in ENCYCLOPEDIA OF STATISTICS IN BEHAVIORAL SCIENCE, John Wiley & Sons, Ltd., Chichester, Bd. 3, 2005, Seiten 1580-1584, wird die Hauptkomponentenanalyse und die Analyse mittels einer Kovarianzmatrix dargelegt.

Das Dokument US 6,377,907 B1 offenbart ein Verfahren zur Auswahl von Performanz-Vorhersage-Metriken. Ein Daten-Sammel-Kernel führt eine Faktoranalyse auf Performanz-Metriken aus, um Faktoren zu identifizieren und jedem Faktor eine Performanz-Metrik zuzuordnen. Der Daten-Sammel-Kernel wählt die Performanz-Metriken mit einem größten Gewicht aus, um die signifikanteste Performanz-Metrik zur Planung einer Performanzkapazität und eines Performanzmanagements zu erhalten.

Die Veröffentlichung "Managing Performance Analysis with Dynamic Statistical Projection Pursuit" von Jeffrey S. Vetter et al., SUPERCOMPUTING, ACM/IEEE 1999 CONFERENCE 13-18. November 1999, PISCATAWAY, NJ, USA, IEEE, Seiten 44-44, offenbart ein Verfahren zur Perfomanzanalyse mittels dynamischem statistischem Projection Pursuit. Dabei sollen die interessanten Performanz-Metriken identifiziert werden, indem die Anzahl der Performanz-Metriken reduziert wird.

Die Veröffentlichung "Statistical data reduction for efficient application performance monitoring" von Lingyun Yang et al., 6th IEEE INT. SYMP. CLUSTER COMP. AND GRID, 2006; SIXTH IEEE INTERNATIONAL SYMPOSIUM ON CLUSTER COMPUTING AND THE GRID: SPANNING THE WORLD AND BEYOND, 2006. CCGRID, 2006, Seiten 327-334, beschreibt ein Verfahren zur statistischen Datenreduktion, das verändert werden kann, um die Auswahl von System-Metriken durchzuführen, welche sowohl notwendig als auch ausreichend sind, um das beobachtete Anwendungsverhalten zu beschreiben, wodurch das zu managende Datenvolumen reduziert wird.

Das Dokument US 2004/0117779 A1 beschreibt ein System und ein Verfahren zur iterativen Codeoptimierung, wobei adaptive oder dynamische Größen-Metriken verwendet werden. Die dynamischen Größen-Metriken werden sowohl für einen Satz von vorgegebenen Faktoren und zugeordneten Gewichten als auch für einen Satz von variablen Faktoren während der Laufzeit des Codes verändert. Die vorgegebenen Faktoren können variiert werden, um die Gesamtperformance des Codes in jeder Optimierungsinstanz zu betrachten. Dabei werden iterativ Informationen des Anwendungscodes und von Optimierungsparametern während der Laufzeit gesammelt, diese Informationen einem Rückkopplungsmechanismus eines Optimierers zugeführt, daraus dynamische Größen-Metriken für den derzeitigen Applikationscode verwendet und dieser Applikationscode auf Basis dieser dynamischen Größen-Metriken optimiert.

Es ist daher Aufgabe der vorliegenden Erfindung, ein Verfahren zur rechnergestützten Performanzanalyse eines Datenverarbeitungssystems anzugeben, welches Aussagen darüber erlaubt, welche Codeteile eines Programmcodes, der auf dem Datenverarbeitungssystem abläuft, zusammenwirken, um Performanz mindernde Komponenten des Datenverarbeitungssystems identifizieren zu können.

Eine weitere Aufgabe der Erfindung besteht darin, ein Datenverarbeitungssystem anzugeben, welches eine rechnergestützte Performanzanalyse eine Datenverarbeitungssystems erlaubt.

Diese Aufgaben werden durch die Merkmale der unabhängigen Patentansprüche gelöst. Vorteilhafte Ausgestaltungen sind in den abhängigen Patentansprüchen wiedergegeben.

Bei dem erfindungsgemäßen Verfahren zur rechnergestützten Performanzanalyse eines Datenverarbeitungssystems, in welchem ein Programmcode mit einer Mehrzahl an Codeteilen abläuft, werden mehrere unterschiedliche Codeteile unter Verwendung einer Varianz erzeugenden Funktionalität, die durch eine Instrumentierung des Codes gebildet ist, hinsichtlich zumindest eines zu untersuchenden Kriteriums, das die Laufzeit und/oder des Ressourcenverbrauch umfasst, wiederholt einer jeweils unterschiedlichen Variation unterzogen. Das Datenverarbeitungssystem wird mit den variierten Codeteilen mehrmals ausgeführt. Eine Varianz der Laufzeit und/oder des Ressourcenverbrauchs der variierten Codeteile oder aller Codeteile des Codeprogramms wird ermittelt. Schließlich wird eine aus der Varianz resultierende Kovarianz einer Multivariantenanalyse unterzogen.

Unter einer Kovarianz wird ein Maß für den Zusammenhang zweier Variablen, im vorliegenden Fall der zu untersuchenden Kriterien, verstanden. Dabei ist es nicht zwingend notwendig, dass die zwei Variablen unterschiedlich sind.

Das der Erfindung zu Grunde liegende Prinzip besteht darin, einen unbekannten Programmcode (auch als Softwaresystem bezeichnet) in definierter Weise zu verändern. Die Veränderung erfolgt bei mehreren der Codeteile des Programmcodes nach einem oder mehreren zu untersuchenden Kriterien. Der Programmcode wird dann mit der vorgenommenen Variation ausgeführt, wobei sämtliche für die Performanz relevanten Komponenten (Hardware- und/oder Softwarekomponenten) des Datenverarbeitungssystems gemessen werden. Gegenüber einem unveränderten Programmcode ergibt sich dabei eine Varianz des zumindest einen zu untersuchenden Kriteriums. Der gleiche Codeteil oder die gleichen Codeteile können mehrfach mit einem anderen Wert variiert werden. Bei der Ausführung des Datenverarbeitungssystems mit dem oder den variierten Codeteilen wird wiederum die Varianz des einen zu untersuchenden Kriteriums der variierten Codeteile oder aller Codeteile des Programmcodes ermittelt. Damit kann für jeden Codeteil eine für statistische Aussagen ausreichende Variation vorgenommen werden, wobei jeweils das zumindest eine zu untersuchende Kriterium gemessen wird. Die gemessenen Daten werden schließlich einer Multivariantenanalyse unterzogen. Dadurch können die erhaltenen Daten in ihrer Dimension reduziert werden, wobei einzelne Kriterien architektonische Kongruenzen aufweisen.

Die Erfindung ermöglicht die Identifikation gemeinsamer Faktoren des Datenverarbeitungssystems. Die gemeinsamen Faktoren repräsentieren architekonische Kongruenzen.

Die Faktoren sind Zahlenwerte, die durch eine Faktorenanalyse gebildet wurden. Die Faktorenanalyse wird strukturentdeckend (explorativ) eingesetzt, und zeigt architektonische Kongruenzen der Module (Objekte, Methoden, etc.) hinsichtlich einer Ursache für Ressourcenverbrauch (inkl. Performanzminderung) auf. Architektonische Kongruenzen bedeutet, dass alle Module in einem Faktor zueinander hohe Ähnlichkeiten bei Ressourcenverbrauch aufweisen, durch evtl. gemeinsam implementiere Funktionalität.

Damit ist der Programmcode einer zielgerichteten Analyse zugänglich, da immanente Eigenschaften vereinfacht dargestellt werden konnten.

Die die Varianz erzeugende Funktionalität kann z.B. durch eine Veränderung des Codes gebildet sein und mit mathematischen, insbesondere statistischen, Methoden ausgewertet werden.

Die Multivariantenanalyse ist ein aus der Statistik bekanntes Verfahren, welche aufgrund von natürlichen Varianzen in Stichproben usw. eine Dimensionsreduzierung vornimmt. Im Rahmen der Erfindung wird jedoch nicht eine natürliche Varianz des Verhaltens des Programmcodes ausgenutzt, sondern die Varianz wird vielmehr durch eine Variation von Ressourcen verbrauchenden Codeteilen erzeugt. Die Multivariantenanalyse wird damit aktiv als Struktur entdeckende Methode verwendet. Aktiv ist das Vorgehen deshalb, da die Varianzen absichtlich erzeugt werden.

Die Codeteile können jeweils eine oder mehrere der folgenden Bestandteile umfassen: Methoden, Prozeduren, Funktionen, Objekte. Das zumindest eine zu untersuchende Kriterium kann die folgenden Kriterien umfassen: die Laufzeit der variierten Codeteile oder aller Codeteile; den Ressourcenverbrauch (z.B. den Speicherverbrauch) der variierten Codeteile oder aller Codeteile des Programmcodes.

Die Analyse kann umso zielgerichteter durchgeführt werden, wenn die mehreren Codeteile wiederholt einer jeweils unterschiedlichen Variation unterzogen werden. Hierdurch kann insbesondere die Genauigkeit der Varianz des zumindest einen zu untersuchenden Kriteriums der variierten Codeteile oder aller Codeteile des Programms verbessert werden. Hierzu trägt auch eine weitere Ausführungsform bei, gemäß der unterschiedliche Codeteile ausgewählt werden, die unter Verwendung der Varianz erzeugenden Funktionalität hinsichtlich des zumindest einen zu untersuchenden Kriteriums variiert werden. Es kann auch vorgesehen sein, dass sämtliche Codeteile des Programmcodes mehrmals variiert werden.

Als Multivariantenanalyse wird bevorzugt eine Faktorenanalyse oder eine Hauptkomponentenanalyse verwendet, wobei beide Verfahren aus dem Bereich der Statistik bekannt sind. Ferner können eine multidimensionale Skalierung, eine Clusteranalyse oder ein neuronales Netz zum Einsatz kommen. Zweckmäßigerweise wird die Multivariantenanalyse unter Verwendung eines rechnergestützt ablaufenden Statistikprogramms durchgeführt. Multivariantenanalyse oder multivariante Datenanalyse bezeichnet eine Sammlung von Methoden, die mehrdimensional verteilte Variablen untersucht.

Die Faktorenanalyse wird für das Aufdecken von inhärenten Strukturen einer Menge von im Allgemeinen abhängigen Merkmalen verwendet. Als Merkmale dienen im Rahmen der Erfindung die zu untersuchenden Kriterien. Im Rahmen der Faktorenanalyse werden viele Merkmale auf weniger sog. Faktoren reduziert. Die Faktorenanalyse erlaubt eine einfache Analyse gemessener Daten. Im Gegensatz dazu kann bei der Untersuchung eines Call-Trees nur bedingt auf Abhängigkeiten eines Systems oder Performanzeigenschaften geschlossen werden. Ähnliches gilt für die statische Codeanalyse. Es werden insbesondere nicht sämtliche Abhängigkeiten erkannt.

Die Faktorenanalyse geht von der Annahme aus, dass jeder Beobachtungswert einer Variablen oder einer standardisierten Variablen sich als Linearkombination mehrerer (hypothetischer) Faktoren beschreiben lässt. Mit der Faktorenanalyse wird damit eine Informationsverdichtung vorgenommen.

Die die Varianz erzeugende Funktionalität ist durch eine Instrumentierung des Codes der Codeteile, z.B. durch aspektorientierte Programmierung, gebildet. Die Varianz erzeugende Funktionalität kann auch durch eine Veränderung des Codes der Codeteile selbst gebildet sein.

Von der Erfindung ist ferner ein Computerprogrammprodukt umfasst, das direkt in den internen Speicher eines digitalen Computers geladen werden kann und Softwarecodeabschnitte umfasst, mit denen die Schritte des oben beschriebenen Verfahrens ausgeführt werden, wenn das Produkt auf einem Computer läuft.

Von der Erfindung ferner umfasst ist ein Datenverarbeitungssystem mit einer Ausführungsumgebung, in der ein Programmcode mit einer Mehrzahl an Codeteilen abläuft, welches Mittel zur Ausführung des oben beschriebenen Verfahrens umfasst.

Die Erfindung wird nachfolgend näher unter Bezugnahme auf die Figuren erläutert. Es zeigen:
- Fig. 1 und 2: jeweils ein Diagramm, in welchem zwei Faktoren gegeneinander aufgetragen sind, welche als Ergebnis einer dynamischen Kongruenzanalyse der Laufzeiteigenschaften eines expliziten Modellcheckers erhalten werden,
- Fig. 3 und 4: jeweils ein Diagramm, in welchem zwei Faktoren gegeneinander aufgetragen sind, welche als Ergebnis einer dynamischen Kongruenzanalyse der Laufzeiteigenschaften eines weiteren Datenverarbeitungssystems erhalten werden,
- Fig. 5 bis 9: jeweils Codeteile eines Programmcodes, anhand dem die dynamische Kongruenzanalyse von Laufzeiteigenschaften erläutert wird, und
- Fig. 10: ein Diagramm, in welchem zwei Faktoren gegeneinander dargestellt sind, welche das Ergebnis der Multivariantenanalyse des Programmcodes aus den Fig. 5 bis 9 sind.

Im Rahmen der vorliegenden Erfindung wird zur rechnergestützten Performanzanalyse eines Datenverarbeitungssystems, in welchem ein Programmcode mit einer Mehrzahl an Codeteilen abläuft.

Das Problem bei der Performanzanalyse von großen, modernen Datenverarbeitungssystemen liegt darin, dass immer weniger nachvollziehbar ist, woher Performanzprobleme stammen. Einzelne Codeteile können bis zu einem gewissen Grad hin ohne Probleme optimiert werden. Jedoch ist nicht klar, auf welche Weise die Codeteile zusammenwirken. Performanzprobleme entstehen weiterhin durch das Zusammenspiel der Codeteile untereinander.

Beispielsweise sperrt ein Codeteil eine Ressource, z.B. einen Speicher, wodurch andere Codeteile auf den Zugriff des Speichers warten müssen. Unter Verwendung der Faktorenanalyse kann verstanden werden, welche Codeteile in dem Datenverarbeitungssystem konkret zusammenwirken.

Die dabei zu Grunde liegende Idee ist es, Korrelationen auszuwerten. In einem Programmcode, der einmal ausgeführt wird, können keine Korrelationen in den Laufzeiten beobachtet werden. Auch wenn ein Programmcode sehr häufig ausgeführt wird, müssen bei Laufzeitmessungen noch nicht unbedingt Korrelationen sichtbar sein. Dies resultiert daraus, dass sich Codeteile des Datenverarbeitungssystems sehr deterministisch verhalten können, wobei diese dennoch stark korreliert sind. Die Korrelation ist als ein normiertes Maß für den linearen Zusammenhang zweier Variablen definiert. Entscheidend bei der Korrelation ist somit die Kovarianz. Die Kovarianz ist ein Maß für den Zusammenhang zweier Variablen. Sie ist positiv, wenn die Variablen gleichsinnigen positiven Zusammenhang haben. Erhöht sich der Wert einer Variablen, so erhöht sich auch der Wert der anderen Variablen. Die Kovarianz ist negativ bei einem reziproken Zusammenhang. Konkret bedeutet dies: bei einer Kovarianz von Null weisen die Variablen keinen oder einen nicht linearen Zusammenhang auf. Im Rahmen der Performanzanalyse braucht der nicht lineare Zusammenhang nicht betrachtet zu werden.

Zur erfindungsgemäßen Performanzanalyse muss damit Varianz in dem Datenverarbeitungssystem erzeugt werden, damit die Kovarianz gemessen und bestimmt werden kann. Die Varianz kann vielfältig erzeugt und anschließend in dem Datenverarbeitungssystem gemessen werden. Im Rahmen der nachfolgend beschriebenen Ausführungsbeispiele wurde der Programmcode mit AspectJ instrumentiert. Die Varianz erzeugende Funktionalität könnte aber auch direkt in dem Programmcode implementiert werden. Instrumentieren stellt die praktikabelste Lösung dar, da das zu untersuchende System als Blackbox betrachtet werden kann, wobei kein direkter Eingriff in den Programmcode vorgenommen zu werden braucht.

Der instrumentierte Programmcode wird nun mehrmals ausgeführt. Dadurch hat der instrumentierte Programmcode nun Varianz in seiner Laufzeit. Die Laufzeiten aller zu beobachtenden Codeteile werden beim Ablauf des Programmcodes gemessen.

Durch die vielfache Ausführung des Programmcodes mit unterschiedlicher Variierung existieren Messungen des in seiner Laufzeit variierten Datenverarbeitungssystems. Durch die Varianz einzelner Codeteile wird die resultierende Kovarianz unter Verwendung eines statistischen Programms mit Hilfe der Faktorenanalyse ausgewertet. Die Faktorenanalyse wird verwendet, um mehrdimensional verteilte Kriterien in ihrer Dimension zu reduzieren. Die Faktorenanalyse ist in der Statistik als mathematisches Rüstzeug weit verbreitet, da dort häufig viele Variablen erhoben werden, zwischen welchen ein Zusammenhang hergestellt wird.

Hierzu werden die gemessenen Daten in das Statistikprogramm eingelesen und eine Faktorenanalyse durchgeführt. Durch das Programm werden Faktoren multidimensional skaliert ausgegeben. Multidimensional heißt in diesem Kontext, dass jeder der gefundenen (hypothetischen) Faktoren eine Dimension darstellt und die gemessenen Module bezüglicher ihrer Faktoren skaliert dargestellt werden. Ist beispielsweise die Laufzeit einer Main-Methode von zwei Faktoren abhängig, wird sie anteilig durch Vektoraddition auf diesen Faktoren in einem Diagramm dargestellt.

Durch die multidimensionale Skalierung fällt oft die Analyse der gefundenen hypothetischen Faktoren leichter. Hierdurch sind nun performanztechnische Abhängigkeiten sichtbar bzw. rechnergestützt ermittelbar, welche vorher unter Umständen nicht bekannt waren. Blockieren sich beispielsweise zwei Module durch eine gemeinsam genutzte Ressource, so weisen diese dieselbe Kovarianz auf und sind damit in einem Diagramm als korreliert erkennbar. Diese beiden Codeteile können nun einer Überarbeitung unterzogen werden, wobei bei Optimierungspotential der Codeteil der Module verändert wird, was zu einer besseren Laufzeit führt oder führen kann.

Wurde ein Codeteil verändert und sollen die Auswirkungen der Veränderungen sichtbar gemacht werden oder verhält sich das Datenverarbeitungssystem hinsichtlich seiner Performanz immer noch nicht gut genug, so muss eine neue Datenbasis mit dem neuen, variierten Datenverarbeitungssystem geschaffen werden. Das in seiner Laufzeit durch die Veränderung des Codeteils variierte Datenverarbeitungssystem muss erneut ausgeführt werden. Dabei werden die Laufzeiten der einzelnen Codeteile wieder gemessen.

Die erfindungsgemäße Vorgehensweise der Performanzanalyse unter Verwendung der Faktorenanalyse erweitert bestehende Profiling-Methoden, wobei es keinen Unterschied macht, ob das zu analysierende Datenverarbeitungssystem asynchron oder synchron ist. Herkömmliche Analysemethoden zeigen Codeteile auf, die eine schlechte oder zu schlechte Performanz aufweisen. Mit Hilfe der künstlichen Varianz, die durch die Faktorenanalyse ausgewertet wird, werden dahinterstehende "Ursachen" oder Faktoren deutlich. So ist es mit dieser Methode beispielsweise möglich, Performanzprobleme zu entdecken, die aufgrund von gemeinsam genutzten Ressourcen entstehen.

Das praktische Vorgehen ist wie folgt: Ein unbekanntes Softwaresystem wird mit aspektorientiertem Code verwebt, der einzelne wohldefinierte Codefragmente (Codeteile) in seiner Laufzeit variiert. Das Softwaresystem wird mit dieser Variation ausgeführt und die Laufzeit der interessierenden Module wird gemessen und gespeichert. Hiernach wird das gleiche Modul erneut mit einem anderen Zeitintervall oder ein anderes Modul in seiner Laufzeit variiert. Das System wird erneut ausgeführt und die Laufzeiten der Module werden gemessen und gespeichert. Jedes interessierende Modul wird mit einer vorgegebenen Anzahl von verschiedenen zusätzlichen Intervallen prolongiert. Die gemessenen Daten ergeben eine Matrix bzw. eine Tabelle. Die Matrix wird nun mit einem Statistikprogramm weiter verarbeitet. Durch die Verlängerung einzelner Module müssen andere Module, die von diesen Modulen abhängig sind, länger warten. Die Varianz in der Laufzeit, die durch das Warten verursacht wird, kann also durch einen anderen Teil der Varianz (die Prolongation) erklärt werden.

Dahingehend wird in dem Statistikprogramm auf den Datensatz die Faktorenanalyse oder eine Hauptkomponentenanalyse angewandt. Dabei sollen hypothetische Faktoren, die die Korrelation der Laufzeitmessungen beschreiben, gefunden werden. Die Faktorenanalyse wird damit als Struktur entdeckendes Analyseinstrumentarium eingesetzt. In diesem Kontext spricht man auch von der exploratorischen Faktorenanalyse.

Bei den folgenden Ausführungsbeispielen werden im Rahmen der Analyse gebildete Korrelationsmatrizen graphisch in einem Vektor-Diagramm dargestellt. Linear unabhängige Daten sind durch orthogonale Vektoren repräsentiert. Im Allgemeinen entspricht der Winkel zwischen den Vektoren dem Kosinus des Korrelationskoeffizienten.

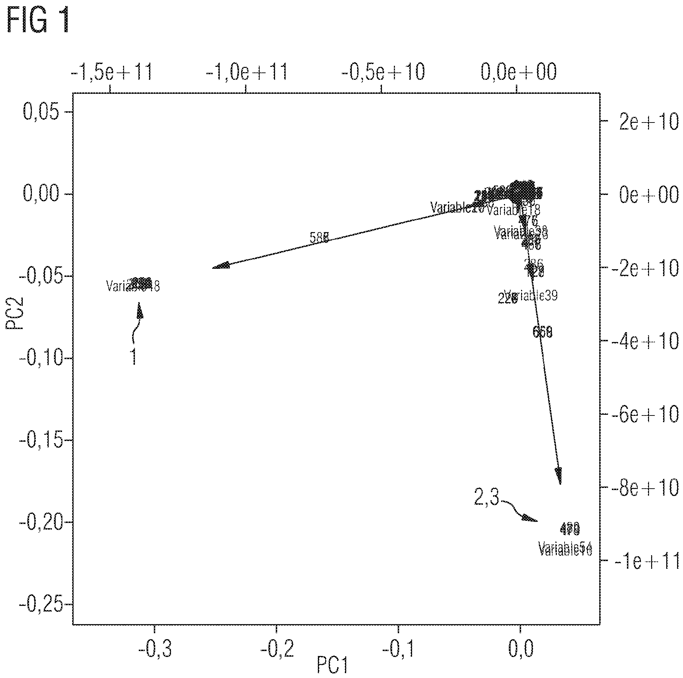

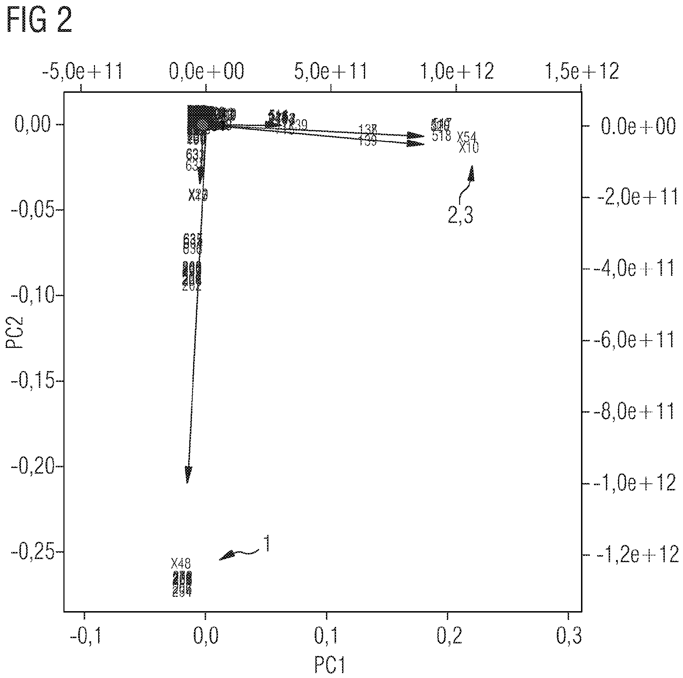

Die Fig. 1 und 2 demonstrieren die Anwendung der Faktorenanalyse an einem expliziten Modellchecker. Ein solches Programm realisiert die Suche in zum Teil großen Graphen, die das Transitionssystem eines kompakt modellierten Programms darstellen. Dabei wird ein sog. On-the-fly-Ansatz verfolgt: Anstatt den Graphen komplett aufzubauen und danach zu durchsuchen, werden Aufbau und Suche kombiniert. Demnach werden zwei getrennte Aufgaben gelöst: für einen gegebenen Zustand müssen Nachfolgezustände ausgerechnet werden, und auf diese Nachfolgezustände muss der Suchalgorithmus angewandt werden. Da der Suchalgorithmus vermeiden muss, bereits gesuchte Zustände erneut zu besuchen, wird eine Hash-Tabelle verwendet, um bereits besuchte Zustände zu speichern. Aus Erfahrung weiß man, dass der größte Teil der Zeit des Suchalgorithmus auf die Berechnung der Hash-Codes für die Zustände verwendet wird.

Fig. 1 zeigt Faktoren PC1 und PC2 des expliziten Modellcheckers, welche in einem Vektor-Diagramm gegeneinander aufgetragen sind. Fig. 1 umfasst die Betrachtung der Laufzeit bei Ablauf des Modellcheckers. Die beiden Faktoren - Berechnung der Nachfolgezustände (Variable 48, Bezugszeichen 1) sowie Lookups in der Hash-Tabelle (Variable 54 und Variable 10, Bezugszeichen 2 bzw. 3, wobei Variable 10 für die Berechnung des Hash-Codes steht) sind in der Figur durch Vektoren herausgestellt, anhand denen der Gesamtzeitverbrauch erklärbar ist. Die Variablen 10, 48 und 54 entsprechen der Messung der Laufzeit eines entsprechenden Codeteils. Dabei wird deutlich, dass die Laufzeiten der Variable 48 unabhängig von den Variablen 54 und 10 und umgekehrt sind. Dies bedeutet, eine Optimierung der Nachfolgeberechnung hat keinen Einfluss auf die Laufzeitanforderungen der Hash-Tabelle. Die Unabhängigkeit der beiden Zeiten voneinander ergibt sich aufgrund der orthogonalen Stellung der Vektoren für Variable 48 sowie Variable 54 und Variable 10 zueinander.

Fig. 2 zeigt die Betrachtung eines modifizierten Modellcheckers. In dieser Variante liegt nur ein Teil der bereits besuchten Zustände in der Hash-Tabelle im Speicher. Um die häufig immensen Speicheranforderungen genügend zu kennen, werden Teile der Zustände auf die Festplatte ausgelagert. In den kleinen Beispielen, die verwendet werden, fällt die hierfür benötigte Laufzeit noch nicht ins Gewicht. Da aber beim Einlesen der ausgelagerten Zustände erneut die Hash-Funktion verwendet wird, ändert sich die Abhängigkeit zwischen Hash-Funktion und Hash-Tabellen-Lookup. Eine Optimierung der Hash-Funktion würde nun immer noch großen Einfluss auf die Hash-Tabellen-Komponente haben, aber auch andere Codeteile beeinflussen. Das Diagramm ist gegenüber Fig. 1 rotiert. Wichtig hier ist nur, dass plötzlich, beim modifizierten Modellchecker die Vektoren für Variable 10 und 54 (Bezugszeichen 2, 3) nicht mehr übereinanderliegen, sondern einen kleinen Winkel bilden. Die Laufzeit der Module X54 und X10 sind nicht mehr in dem selben Maße abhängig wie bei Fig. 1 (durch das Benutzen der Festplatte).

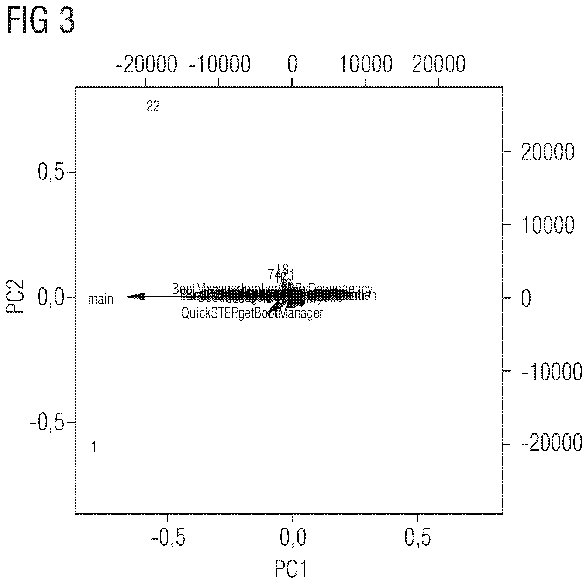

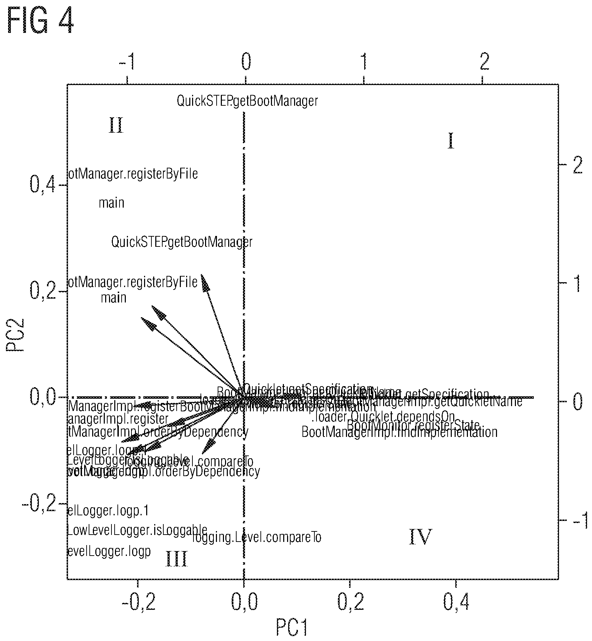

Die Fig. 3 und 4 demonstrieren die Anwendung einer dynamischen Kongruenzanalyse eines Programmcodes, welcher Performanzprobleme aufweist. Bei diesem wurden mit Profilern Messungen durchgeführt, wobei durch die hohe Komplexität des Programmcodes aber keine Aussage getroffen werden konnte, wie einzelne Codeteile in dem System interagieren. Beispielsweise ist durch Messung bekannt, dass die Methode "LowLevelLogger. logp" stark in die Laufzeit des Systems einfließt. Man er hält jedoch keinen Ansatzpunkt, welche Codeteile optimiert werden müssen, um eine bessere Performanz des Gesamtsystems zu erhalten. Für eine solche Aussage muss ein hohes Wissen über das System vorliegen.

Fig. 3 zeigt in einem Vektordiagramm die Faktoren PC1 und PC2 des Gesamtsystems. Dabei wurde eine Kongruenzanalyse des gesamten Datenverarbeitungssystems mit allen JAR-Files des Programmcodes durchgeführt. Durch die hohe Anzahl von Codeteilen in dem Datenverarbeitungssystem ist jedoch ein klarer Überblick über Zusammenhänge nicht möglich. Es ist jedoch erkenntlich, dass der Vektor der Methode "QuickStep.getBootManager" fast orthogonal zu dem Vektor der main-Methode steht. Hieraus ist erkennbar, dass diese Methode eine weitere Untersuchung wert ist. In Fig. 3 ist dies schwer zu erkennen, da der Pfeil für die getBootManager Methode sehr klein ist. Fig. 4 ist aber ein verfeinertes Bild, in dem die Methode besser zu erkennen ist, wobei diese spiegelverkehrt dargestellt ist.

Fig. 4 zeigt eine Vielzahl von Faktoren des gesamten Datenverarbeitungssystems, welche skaliert und gefiltert sind. Die Faktoren sind als Hauptkomponenten PC1 und PC2 in einem Vektordiagramm aufgetragen. Die in Fig. 4 dargestellten Faktoren entsprechen dabei einzelnen Codeteilen. Vektoren, die im dritten Quadranten III liegen, können zu einem gemeinsamen Faktor zusammengefasst werden. Dieser Faktor repräsentiert einen Logging-Mechanismus, welcher einen großen Teil der Laufzeit einnimmt und hinsichtlich der Funktionalität des Datenverarbeitungssystems unbeachtlich ist. Die im zweiten Quadranten II liegenden Vektoren, die positive Werte für die Hauptkomponente PC2 und negative Werte für die Hauptkomponente PC1 aufweisen, beeinflussen die Laufzeit des Datenverarbeitungssystems, indem sie dieses verlangsamen.

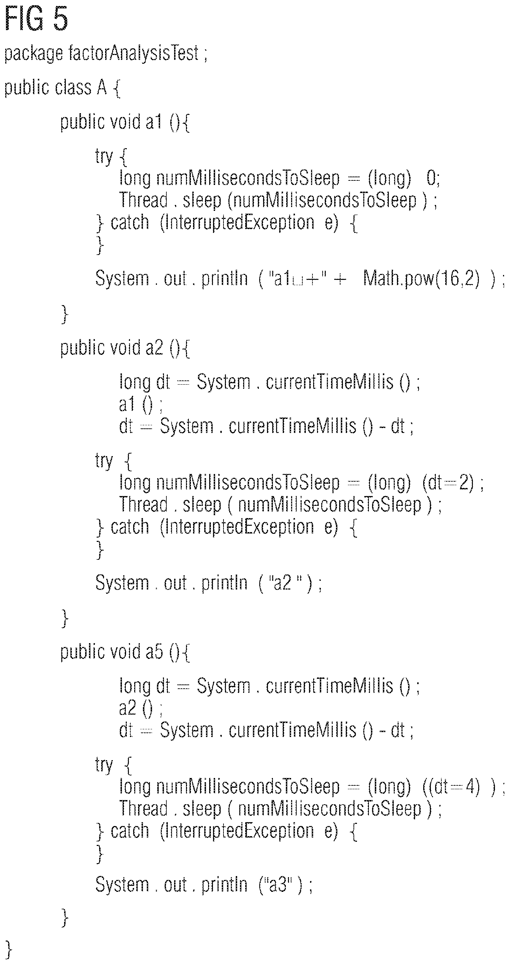

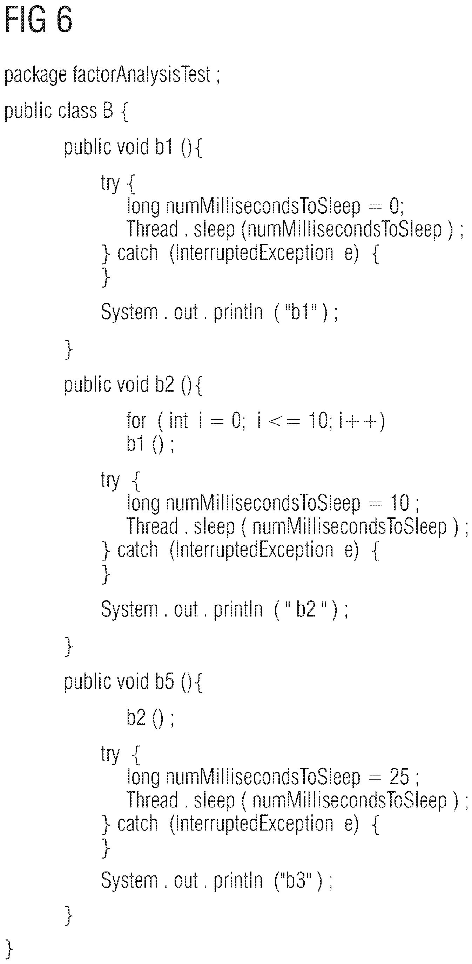

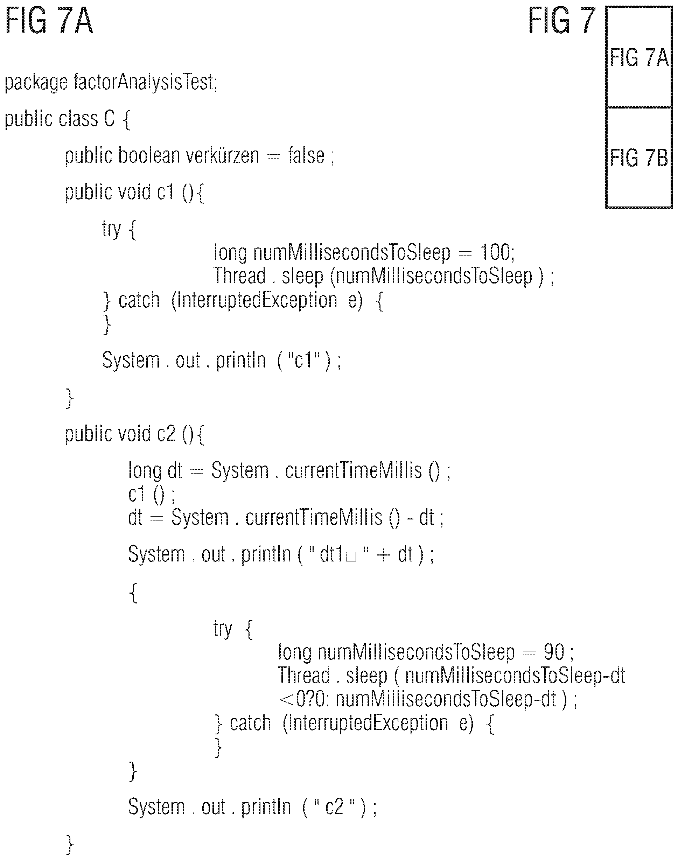

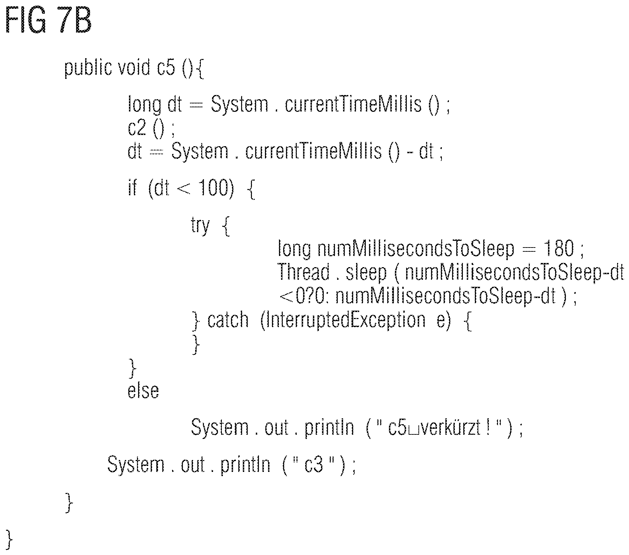

Die dynamische Kongruenzanalyse von Laufzeiteigenschaften wird im Folgenden anhand der Listings der Fig. 5 bis 9 demonstriert, in welchem beispielhaft zu analysierender Programmcode dargestellt ist. Das Paket "VectorAnalysisTest" beinhaltet drei Klassen A, B und C welche wiederum jeweils drei Methoden enthalten. Diese Methoden rufen sich gegenseitig auf. So ruft beispielsweise Methode a2 die Methode a1 auf, während Methode a5 nur Methode a2 aufruft. Die Methoden der Klasse A korrelieren positiv linear. Dies bedeutet, die Methode a2 benötigt doppelt so lange wie die Methode a1 und a3 benötigt vierfach so lange wie die Methode a2. Die Methoden der Klasse C interagieren negativ. Braucht Methode c1 zu lange, so verkürzen sich die Laufzeiten der anderen Methoden. Die Methoden der Klasse B haben eine konstante Laufzeit. Die Methode b2 ruft die Methode b1 in einer Schleife zehnmal auf.

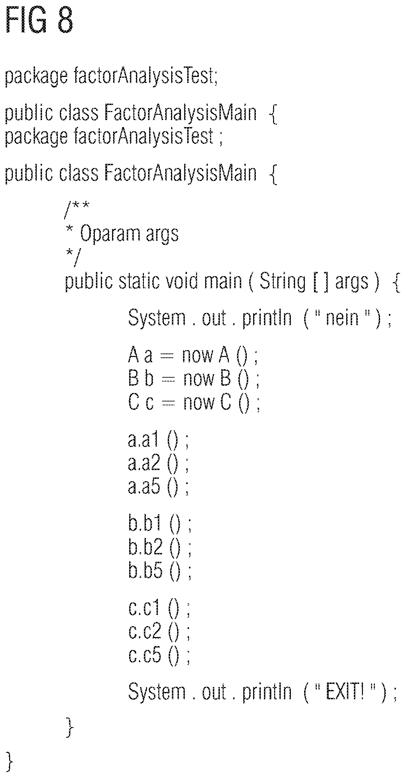

Die Methode main generiert die drei Objekte a, b und c. Die Objekte a, b und c führen dann zu beobachtende Methoden aus (Fig. 8).

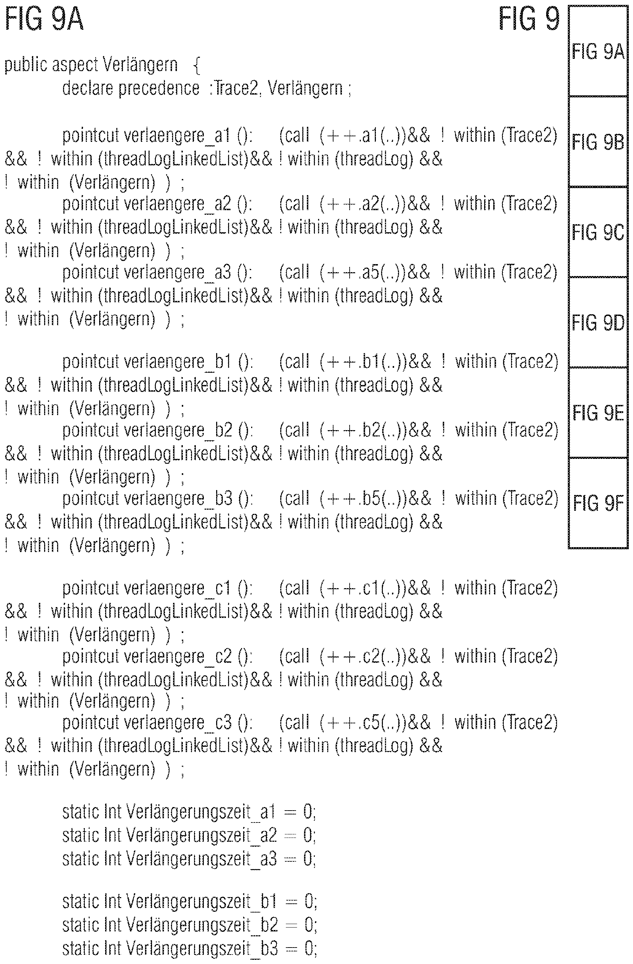

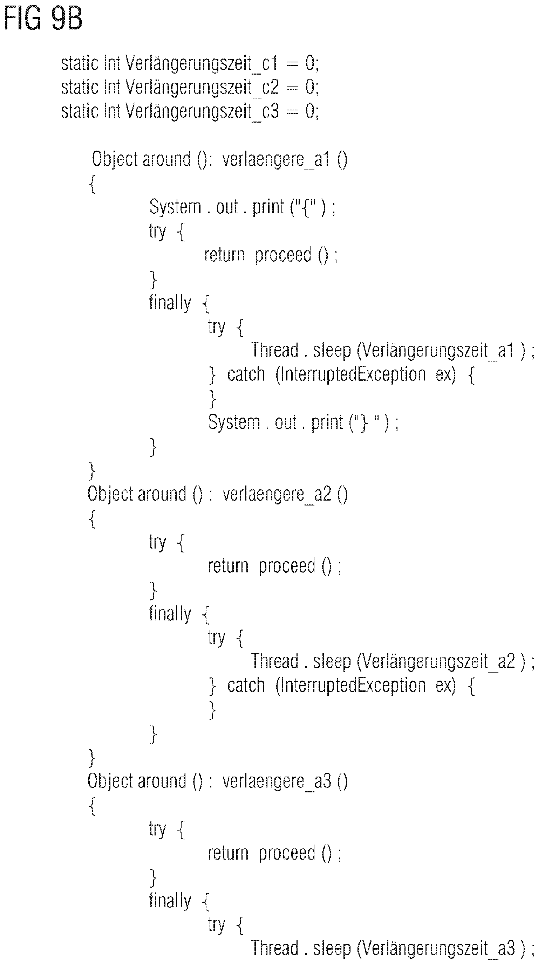

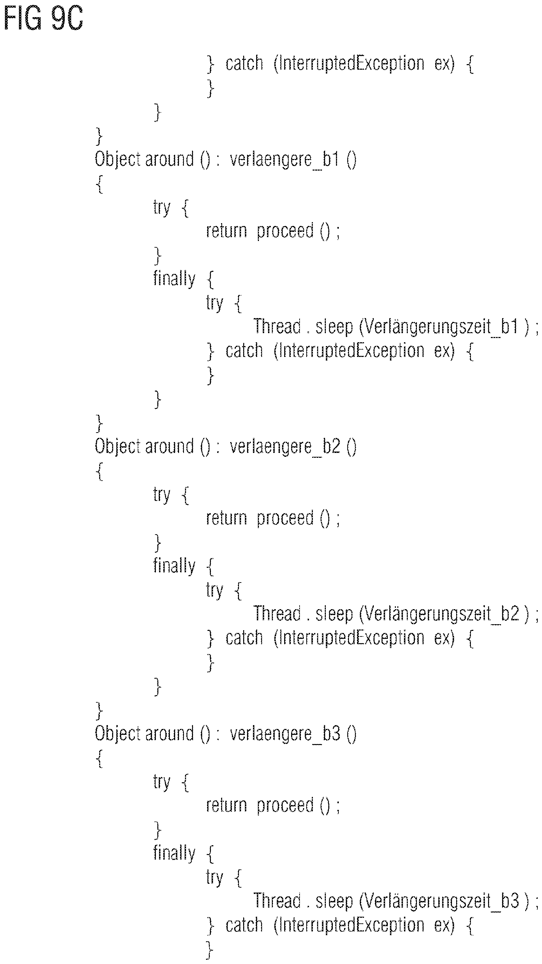

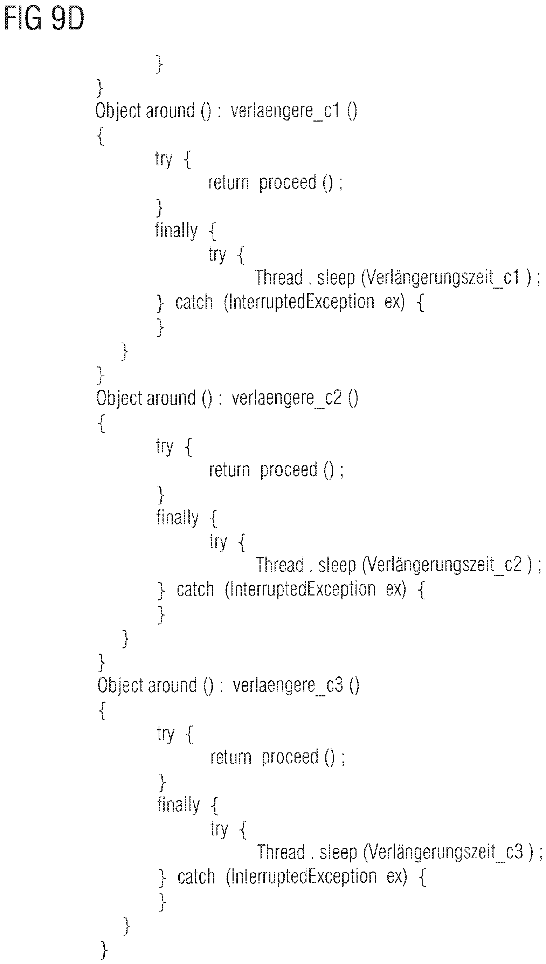

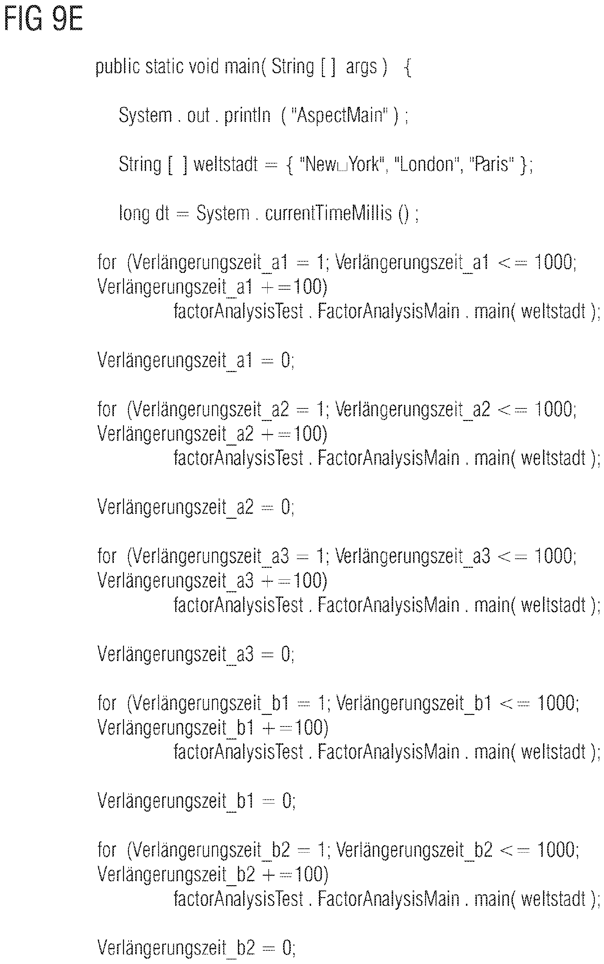

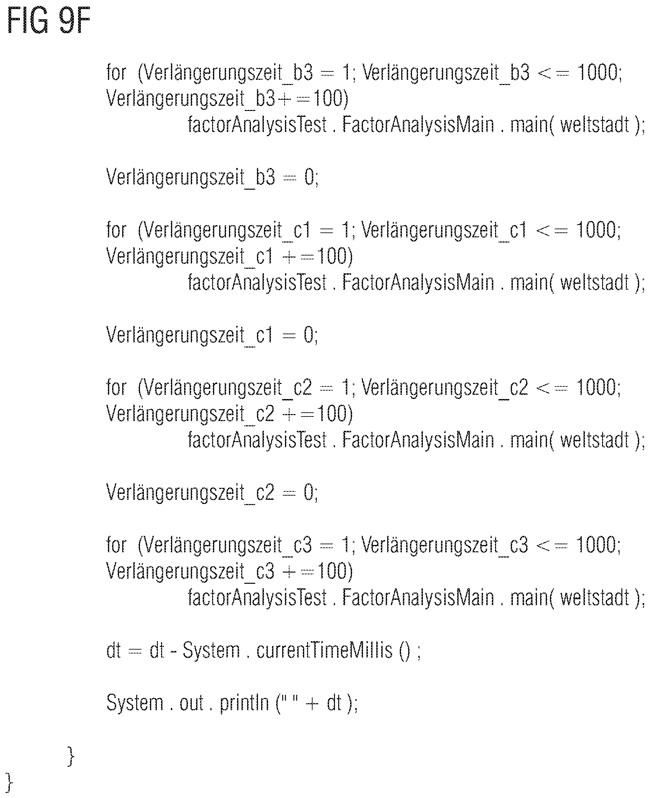

Der Aspekt "Verlängern" übernimmt die Aufgabe des Variierens von Methoden (vgl. Fig. 9). Jede Methode wird, beginnend bei 1, um 100er Schritte bis 1.000 ms verlängert.

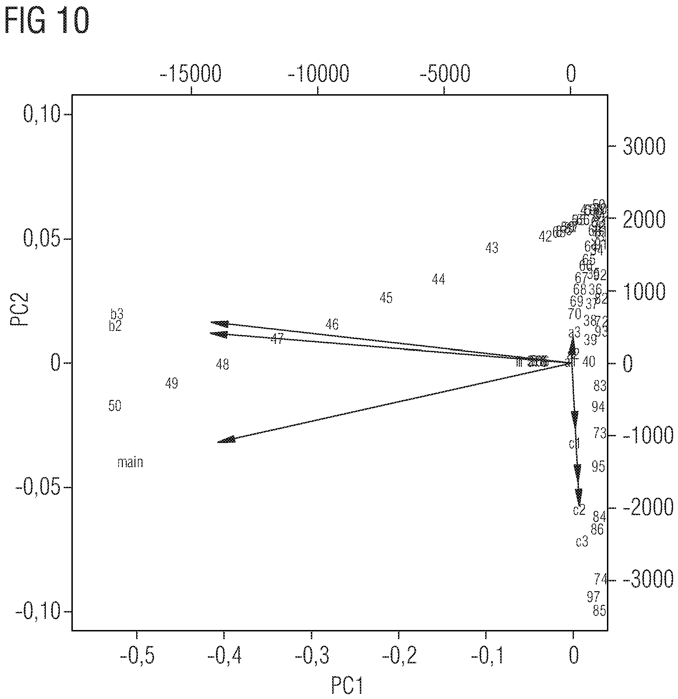

Es wurde die main-Methode des Aspekts ausgeführt, wobei alle Laufzeiten mit dem Trace2-Aspekt (nicht aufgeführt) gemessen wurden. Die Daten können nun in einem statistischen Programm weiterverarbeitet werden. Als Statistikprogramme können beispielsweise R, S-Plus oder SPSS verwendet werden. Im konkreten Fall wurde in R eine Hauptkomponentenanalyse, welche eine Art der Faktoranalyse darstellt, durchgeführt. Die Resultate zeigt Fig. 10. Gut erkennbar sind die einzelnen Faktoren des Testprogramms. Die Methoden der einzelnen Klassen können zu einem Faktor zusammengefasst werden. Die Optimierungen in einer Klasse wirken sich nicht auf eine andere Klasse aus. Dadurch kann ein Überblick über das System bereitgestellt werden, ohne eine Betrachtung der einzelnen Codeschritte vornehmen zu müssen.

## Patentansprüche

1. Verfahren zur rechnergestützten Performanzanalyse eines Datenverarbeitungssystems, in welchem Programmcode mit einer Mehrzahl an Codeteilen abläuft, bei dem
- mehrere unterschiedliche Codeteile unter Verwendung einer Varianz erzeugenden Funktionalität, die durch eine Instrumentierung des Codes gebildet ist, hinsichtlich der Laufzeit und/oder des Ressourcenverbrauchs wiederholt einer jeweils unterschiedlichen Variation unterzogen werden;
- der Programmcode auf dem Datenverarbeitungssystem mit den variierten Codeteilen mehrmals ausgeführt wird, wobei bei jeder Ausführung eine Varianz (1) der Laufzeit und/oder des Ressourcenverbrauchs der variierten Codeteile oder aller Codeteile des Programmcodes gegenüber dem unveränderten Programmcode ermittelt wird; und
- eine aus der Varianz resultierende Kovarianz einer Multivariantenanalyse unterzogen wird.

2. Verfahren nach Anspruch 1, bei dem die Codeteile jeweils eine oder mehrere der folgenden Bestandteile umfassen: Methoden, Prozeduren, Funktionen, Objekte, Module.

3. Verfahren nach einem der vorherigen Ansprüche, bei dem sämtliche Codeteile des Programmcodes mehrmals variiert werden.

4. Verfahren nach einem der vorherigen Ansprüche, bei dem als Multivariantenanalyse eine Faktorenanalyse, Hauptkomponentenanalyse, Multidimensionale Skalierung, Clusteranalyse oder ein neuronales Netz verwendet wird.

5. Verfahren nach einem der vorherigen Ansprüche, bei dem die Multivariantenanalyse unter Verwendung eines rechnergestützt ablaufenden Statistikprogramms durchgeführt wird.

6. Computerprogrammprodukt, das direkt in den internen Speicher eines digitalen Computers geladen werden kann und Softwarecodeabschnitte umfasst, mit denen die Schritte gemäß einem der vorherigen Ansprüche ausgeführt werden, wenn das Produkt auf einem Computer läuft.

7. Datenverarbeitungssystem mit einer Ausführungsumgebung, in der ein Programmcode mit einer Mehrzahl an Codeteilen abläuft, welches Mittel zur Ausführung des Verfahrens gemäß einem der Ansprüche 1 bis 6 umfasst.

## Claims

1. Method for the computer-assisted performance analysis of a data processing system, wherein program code with a plurality of code parts is running, in which
- a plurality of different code parts are repeatedly subjected to a different variation in each case using a functionality generating a variance, which is formed by an instrumentation of the code, with regard to the runtime and/or the resource consumption;
- the program code is executed a number of times on the data processing system with the varied code parts, wherein on each execution a variance (1) of the runtime and/or of the resource consumption of the varied code parts, or of all code parts of the program code, with respect to the unmodified program code is determined; and
- a covariance resulting from the variance is subjected to a multivariant analysis.

2. Method according to claim 1, wherein the code parts respectively comprise one or more of the following components: methods, procedures, functions, objects, modules.

3. Method according to one of the preceding claims, wherein all code parts of the program code are varied multiple times.

4. Method according to one of the preceding claims, wherein a factor analysis, principal component analysis, multidimensional scaling, cluster analysis or a neuronal network is used as the multivariant analysis.

5. Method according to one of the preceding claims, wherein the multivariant analysis is performed using a statistics program running in a computer-assisted manner.

6. Computer program product which can be loaded directly into the internal memory of a digital computer and comprises software code sections with which the steps according to one of the preceding claims are executed when the product is running on a computer.

7. Data processing system, with an execution environment in which a program code with a plurality of code parts is running, which comprises means for executing the method according to one of claims 1 to 6.

## Revendications

1. Procédé d'analyse de performance assistée par ordinateur d'un système de traitement de données, dans lequel est exécuté un code de programme comportant une pluralité de parties de code, dans lequel:
- plusieurs parties de code différentes subissent répétitivement une variation respectivement différente, en ce qui concerne la durée de marche et/ou la consommation de ressources, avec utilisation d'une fonctionnalité génératrice de variance et formée par une instrumentation du code ;
- le code de programme est exécuté plusieurs fois sur le système de traitement de données avec les parties de code ayant subi des variations, à chaque exécution étant déterminée une variance (1) de la durée de marche et/ou de la consommation de ressources des parties de code ayant subi des variations ou de toutes les parties de code du code de programme par rapport au code de programme non modifié ; et
- une covariance d'une analyse multivariante résultant de la variance.

2. Procédé selon la revendication 1, dans lequel les parties de code comprennent respectivement une ou plusieurs des composantes suivantes : méthodes, procédures, fonctions, objets, modules.

3. Procédé selon l'une des revendications précédentes, dans lequel toutes les parties de code du code de programme subissent plusieurs variations.

4. Procédé selon l'une des revendications précédentes, dans lequel est utilisée, en tant qu'analyse multivariante, une analyse factorielle, une analyse de composantes principales, une mise à l'échelle multidimensionnelle, une analyse de clusters ou un réseau neuronal.

5. Procédé selon l'une des revendications précédentes, dans lequel l'analyse multivariante est exécutée avec utilisation d'un programme statistique exécuté de manière assistée par ordinateur.

6. Produit de programme informatique qui peut être chargé directement dans la mémoire interne d'un ordinateur numérique et qui comprend des sections de code logiciel avec lesquelles sont exécutées les étapes selon l'une des revendications précédentes lorsque le produit tourne sur un ordinateur.

7. Système de traitement de données avec un environnement d'exécution dans lequel tourne un code de programme avec une pluralité de parties de code, comprenant des moyens pour exécuter le procédé selon l'une des revendications 1 à 6.
